# EUROPÄISCHE PATENTSCHRIFT

(11) **EP 0 696 521 B1**
(45) Veröffentlichungstag und Bekanntmachung des Hinweises auf die Patenterteilung: **10.12.1997**
(21) Anmeldenummer: 95112352.0
(22) Anmeldetag: 05.08.1995
(51) Int. Cl.: B60C 11/12

(54) **Fahrzeugreifen mit einer Lauffläche mit im wesentlichen axial verlaufenden Einschnitten**
Vehicle tyre with a tread comprising substantially axially extending sipes
Bandage pneumatique de véhicule ayant un profil pourvu d'incisions s'étendant essentiellement en direction axiale

(30) Priorität: 08.08.1994 DE 4427895
(43) Veröffentlichungstag der Anmeldung: 14.02.1996
(73) Patentinhaber: Continental Aktiengesellschaft, 30165 Hannover (DE)
(72) Erfinder: Rodewald, Helmut, D-31249 Hohenhameln (DE)

(56) Entgegenhaltungen:
- EP-A- 0 564 435
- FR-A- 791 250

## Beschreibung

Die Erfindung bezieht sich auf einen Fahrzeugreifen mit einer Lauffläche, welche zumindest in einem ihrer axialen Randbereiche in der Draufsicht im wesentlichen axial verlaufende Einschnitte aufweist, die in solcher Weise gewellt sind, daß die Wellenberge und -täler im wesentlichen Geraden sind, die in der Querebene diagonal geneigt sind; solche Reifen sind bekannt. Die im wesentlichen axial verlaufenden Einschnitte, die im Rahmen dieser Anmeldung auch als Quereinschnitte bezeichnet werden, verlaufen - wie im Stand der Technik bekannt - vorzugsweise nicht exakt axial sondern in einer Neigung zur Axialen um 10° bis 60°. Sofern die Reifenlauffläche mit Querrillen ausgestattet ist, verlaufen sie vorzugsweise - wie ebenfalls an sich bekannt - im wesentlichen parallel zu diesen Querrillen.

Das zwischen Einschnitten stehenbleibende Gummi wird üblicherweise als Lamelle bezeichnet.

Grundsätzlich verringern Einschnitte die Steifigkeit, insbesondere gegenüber Kräften senkrecht zu diesen Einschnitten; Quereinschnitte verringern also insbesondere die Längssteifigkeit. Die Laufflächenerweichung führt zu einer genaueren Anpassung der Reifenoberfläche an die Rauhtiefen der Fahrbahn im Latsch, wodurch ein höherer Reibschluß ermöglicht wird.

Darüberhinaus ist die traktionsfördernde Wirkung insbesondere auf verschneiten Straßen bekannt, die darauf zurückgeführt wird, daß die Lamellenverbiegung, die schon bei geringen Längskräften auftritt, sich bis in die in den Latsch reichenden Stirnflächen der Lamellen als deren Schrägstellung auswirkt, sodaß diese nicht plan aufliegen sondern vielmehr mit einer ihrer Kanten.

Es hat sich herausgestellt, daß die Stirnseitenschrägstellung der Lamellen den Bremsweg auf nasser Straße verschlechtern. Dieser Nachteil schmerzt bei modernen Winterreifen besonders, weil es wegen der schneeärmeren aber regenreicheren Winter nicht mehr allein auf Griffigkeit auf Schnee sondern auch auf gutes Bremsen auf feuchter Straße ankommt. Auch auf trockener Straße wird hoher Kraftschluß erwartet wie von einem Sommerreifen.

Auch die immer höher geschraubte Höchstgeschwindigkeit der Fahrzeuge und damit einhergehend das Vordringen der H-, V- und Z-Reifen zu Lasten der Q- und S-Reifen (Q = zugelassen bis 160 km/h, S = bis 180 km/h, T = bis 190 km/h, H = bis 210 km/h, V = bis 240 km/h, Z = über 240 km/h) trägt zu dieser Erweiterung des Anforderungsprofiles bei, weil H-, V- und Z-Reifen zur Vermeidung zerstörerischer Temperaturen im Inneren der generell schlecht wärmeleitenden Lauffläche solche Gummimischungen benötigen, die leider - unabhängig vom Niederschlag - bei niedrigen Temperaturen eine beträchtliche Erhärtung mit entsprechendem Abfall der möglichen Reibungswerte zeigen, sodaß für solche Fahrzeuge auch auf völlig unverschneiten Straßen aus Sicherheitsgründen Winterreifen erforderlich wenngleich nicht vorgeschrieben sind.

Ausgehend von den bewährten Winterreifen wäre das Bremsverhalten auf feuchten Straßen dadurch zu verbessern, daß die Anzahl der Einschnitte, insbesondere der Quereinschnitte, gesenkt würde. Dabei müßte aber ein verschlechtertes Verhalten auf Schnee hingenommen werden.

Aus dem französischen Patent Nr. 791 250 aus dem Jahre 1935 ist ein Fahrzeugreifen mit einer Lauffläche bekannt, welche in einem axialen Randbereich in der Draufsicht im wesentlichen axial verlaufende Einschnitte mit einer solchen Wellung aufweist, daß die Wellenberge und -täler Geraden sind und sich in der Querebene in solcher Orientierung diagonal erstrecken, daß man beim Gehen in der Querebene entlang der Einschnitte nach radial außen nach axial außen gelangt.

Aufgabe der Erfindung ist es, die mögliche Bremsverzögerung auf feuchten Straßen zu steigern und dabei die mögliche Vortriebsbeschleunigung auf Schnee allenfalls kaum oder gar nicht zu verschlechtern und eine gute Quertraktion zu erzielen.

Die Aufgabe wird erfindungsgemäß dadurch gelöst, daß sich die Wellenberge und -täler in der Querebene in solcher Orientierung diagonal erstrecken, daß man beim Gehen in der Querebene entlang der Einschnitte nach radial außen nach axial innen gelangt.

Man nahm früher an, daß die Orientierung der Neigung der Wellenberge und -täler wenig Einfluß habe und wenn schon, daß die umgekehrte Orientierung insgesamt vorteilhaft sei; überraschenderweise hat sich aber nun heraus gestellt, daß genau die gegenteilige Orientierung wie in dem französischen Patent 791 250 gelehrt den günstigsten Eigenschaftsmix erzielt.

Vorzugsweise nehmen die Wellenberge und -täler in der Querebene einen Winkel zur Radialen zwischen 20° und 70°, besonders bevorzugt zwischen 30° und 50° ein.

Der Erfindung lag die Erkenntnis zugrunde, daß für den Vortrieb auf Schnee kleine Schrägstellungen der Lamellenstirnflächen ausreichen, die sich aber schon bei geringen Längskräften einstellen müssen. Beim Bremsen auf feuchter Straße sind aber viel größere Beschleunigungen möglich, die bei Reifen nach dem Stand der Technik zu viel größeren Lamellenverbiegungen und einhergehenden Schrägstellungen der Lamellenstirnflächen führen als für die Traktion auf Schnee erforderlich. Weiterhin wurde erkannt, daß der Verzögerungsabfall auf feuchter Straße umso größer ist, desto größer die Schrägstellung der Lamellenstirnflächen ist. So kam der Erfinder auf die Idee, daß eine stark progressive Federkennlinie der Lamellen den beschriebenen Konflikt wenn auch nicht vollständig aufheben so doch zumindest entschärfen kann. Eine kleine Progression zeigen bereits die üblichen Einschnitte dadurch, daß sich einander benachbarte Lamellen ab einer bestimmten Verbiegung unter Überbrückung der Einschnittdicke aneinander anlehnen. Dabei behalten sie aber die Fähigkeit, aufeinander abzugleiten.

Wesentlicher Bestandteil der Erfindung ist, dieses Abgleiten durch Formschluß zu unterbinden und damit die Biegewilligkeit der Lamellen ab dem durch die Wahl der Einschnittdicke bestimmbaren Schwellwert noch weiter zu senken.

Als Formschlußmittel wurde als erstes erwogen, die Ausrichtung der Wellenberge und -täler in der Querebene von der bekannten radialen Ausrichtung in die axiale zu ändern. Zwar war damit tatsächlich ein Formschluß erreichbar und zeigte auch positive Auswirkungen auf das Verhältnis zwischen Naßbremsen und Schneetraktion, jedoch erwiesen sich die sich so ergebenden Lamellen in der Radialen als weicher und in der Axialen als beulanfällig. Erstes erhöht den Rollwiderstand und zweites vermindert die maximale Querbeschleunigung insbesondere auf trockener Straße. Überdies bereiten die dementsprechend geformten, einschneidenden Bleche sowohl beim Schließen als auch beim Öffnen der Vulkanisationsform Schwierigkeiten.

Die Erfinder gelangten zu der Erkenntnis, daß mit einer diagonalen Ausrichtung der Wellenberge und -täler nahezu der gleiche Formschluß erreicht werden müßte wie mit einer rein axialen Ausrichtung. Analog der bekannten und bewährten Lehre, wonach man axial äußere Längs-Einschnitte in der Querebene so neigt, daß man beim Gehen nach radial außen nach axial außen gelangt und damit optimale Quertraktion bei günstiger Längstraktion erreicht, wurde zunächst angenommen, daß es am günstigsten sei, diagonal verlaufende Wellenberge- und täler im wesentlichen axial verlaufender Einschnitte auch in der Orientierung anzuordnen, daß man beim Gehen nach radial außen nach axial außen gelangt. Hiermit wurden aber nicht die erhofften Ergebnisse erzielt. Der hartnäckig hinterfragende Erfinder hat sich mit dieser unangenehmen Überraschung aber nicht zufrieden gegeben und deshalb entgegen üblicher Einschätzung der Fachleute Versuche mit einer erfindungsgemäßen, nämlich inversen, Orientierung der Einschnittneigung durchgesetzt und überraschend gute Ergebnisse erzielt.

Der Punkt, ab dem Formschluß eintritt, der den Knick in der Biegefederkennlinie hervorruft, wird im wesentlichen durch das Verhältnis der 3. Potenz der Einschnitttiefe zur 1. Potenz der Einschnittdicke bestimmt; je nach Einschnittdichte, -tiefe und Gummihärte ergibt sich eine günstige Lage des Abknickpunktes bei einer Schnittdicke zwischen 0,3 und 1,0 mm. Es wird als Vorteil gewertet, daß diese Einschnittdicken sich im Bereich des schon Bekannten bewegen, was die Umstellung auf die Erfindung erleichtert.

Speziell an besonders reich lamellierten Winterreifen für PKW, wo heutzutage Einschnittdicken zwischen 0,5 und 0,6 mm üblich sind, scheint die optimale Weite der Einschnitte leicht darunter zu liegen, nämlich etwa bei 0,4 mm.

Die Verbesserungen im Naßbremsen werden besonders deutlich, wenn auch die im axial inneren Bereich angeordneten Einschnitte in erfindungsgemäßer Weise gestaltet sind.

Zur Realisierung erfindungsgemäßer Reifen braucht an den Reifenrohlingen nichts geändert zu werden. Es sind allerdings geänderte Vulkanisationsformen erforderlich. Statt der bekannten Einschnittbleche sind in die Vulkanisationsformen nämlich solche Einschnittbleche zu verankern, die eine Schrägstellung der Wellenberge und -täler zur Blechverankerungskante aufweisen. Anstatt die Bleche erst zu stanzen und dann in die Wellung zu biegen scheint es wegen der Schrägstellung der Wellenberge und -täler und damit zusammenhängend der unterschiedlichen Länge der einzelnen Wellenberge und -täler in der Nähe der Ränder zweckmäßig zu sein, erst größere Bleche in die gewünschte Wellung zu biegen parallel zu den Kanten des Blechhalbzeuges und erst danach - nun schräg zu den Kanten des Blechhalbzeuges - die einzelnen Einschnittbleche auszustanzen.

Die Erindung wird nachfolgend anhand dreier Figuren näher erläutert. Es zeigt
- Fig. 1: in perspektivischer Ansicht einen erfindungsgemäßen Reifen,
- Fig. 2: vergrößert den gleichen Reifen, aufgeschnitten entlang dem in Figur 1 angegebenen Schnittverlauf,
- Fig. 3: eines aus der Vielzahl von erfindungsgemäßen Blechstücken, die in der Vulkanisationsform zur Herstellung der erfindungsgemäßen Einschnitte zu verankern sind und
- Figuren 4: die Funktionsweise und Wirkung der Erfindung, und zwar:
- Fig. 4a: Längsschnitt durch einen Profilteil ohne Längskrafteinwirkung,
- Fig. 4b: in gleicher Dastellung den gleichen Profilteil mit Längskrafteinwirkung und
- Fig. 4c: die durch die Erfindung bewirkte Änderung in der Biegefederkennlinie einer Lamelle.

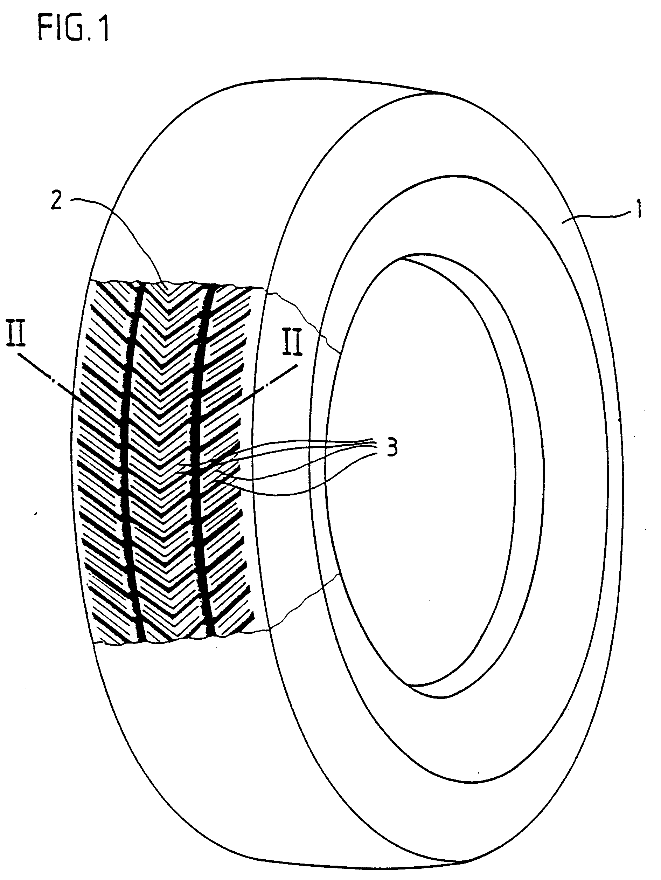

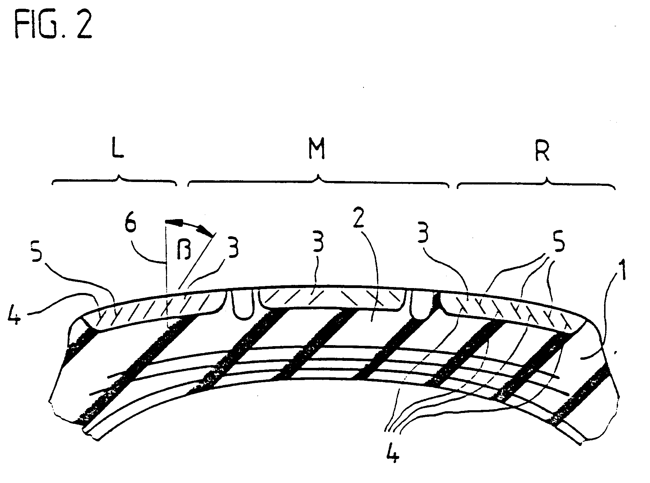

Figur 1 zeigt in perspektivischer Ansicht einen erfindungsgemäßen Reifen 1 mit einer Lauffläche 2, welche über ihrer gesamten axialen Erstreckung in der Draufsicht im wesentlichen axial verlaufende Einschnitte 3 aufweist. In dick strichpunktierter Linie ist der zu Figur 2 führende Schnittverlauf entlang der Einschnitte 3 angegeben.

Figur 2 zeigt vergrößert den gleichen Reifen 1, jedoch nicht in perspektivischer Ansicht sondern aufgeschnitten in der Querebene entlang der Einschnitte 3. Die Wellenberge 4 und Wellentäler 5, wo die Oberfläche gewölbt ist, erscheinen als dünne Volllinien, die gemäß üblicher Darstellung nicht bis zur jeweils benachbarten, in dicker Vollinie dargestellten Körperkante ausgezogen sind und entsprechend der erfindungsgemäßen Diagonalstellung der im übrigen bekannten Einschnittwellung hier schräg zur Radialen 6 stehen. In diesem Ausführungsbeispiel beträgt der Schrägungswinkel β 45°.

Wenngleich - wie hier gezeigt - die erfindungsgemäße Schrägstellung der Wellenberge 4 und -täler 5 vorzugsweise über der gesamten Breite der Lauffläche 2, soweit sie eingeschnitten ist, angewandt ist, ist diese Schrägstellung besonders wichtig in den beiden Randbereichen L und R der Lauffläche 2.

Erfindungsgemäß ist die Schrägstellung der Wellenberge 4 und -täler 5 so orientiert wie hier gezeigt, das heißt, daß man beim Gehen von radial innen nach radial außen entlang einem Wellenberg 4 oder -tal 5 nach axial innen gelangt. Bei symmetrischen Reifen sollte der Orientierungswechsel im Mittenbereich M liegen.

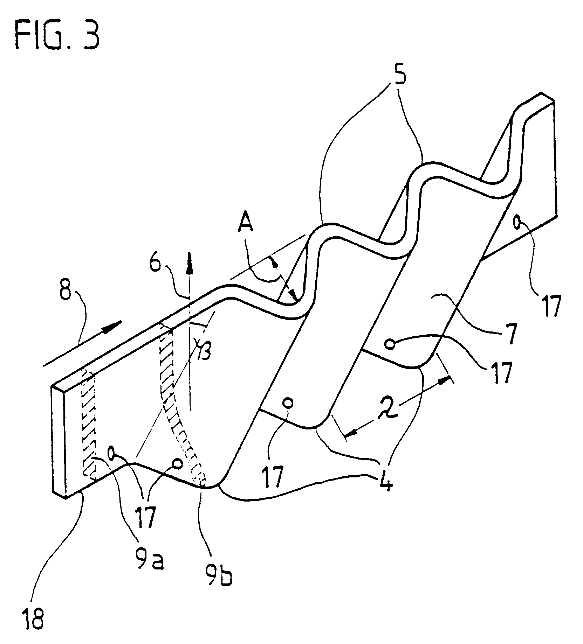

Figur 3 zeigt eines aus der Vielzahl von erfindungsgemäßen Blechstücken 7, die in der Vulkanisationsform zur Herstellung der erfindungsgemäßen Einschnitte zu verankern sind, in perspektivischer Darstellung. Zur Verankerung sind an sich bekannte Befestigungselemente vorgesehen, hier in der Nähe der unteren Blechkante 18 vorgesehene Durchbrüche 17.

Zur Verständniserleichterung sind die vordere und hintere Stirnfläche des Bleches 7 radial stehend gezeichnet, obwohl sie bevorzugt, wie bekannt, zumindest bei Sackeinschnitten leicht geneigt zur Radialen verlaufen, wie Figur 2 zeigt. Die Wellenberge 4 und -täler 5 sind in bekannter Weise geradlinig, jedoch gegenüber der Radialen 6 im Winkel β geneigt.

Zur weiteren Verdeutlichung ist in zwei verschiedenen Ebenen quer zur Haupterstreckung 8 der Blechstücke 7 die jeweilige Schnittfläche 9a und 9b in gestrichelter Linie umrissen. Die Haupterstreckung 8 der Blechstücke 7 kann im Winkelbereich +/- 45° zur hier nicht dargestellten Axialen liegen, vorzugsweise bei etwa 20 bis 30°. Die Wellenlänge entlang der Axialen ist mit Lambda bezeichnet.

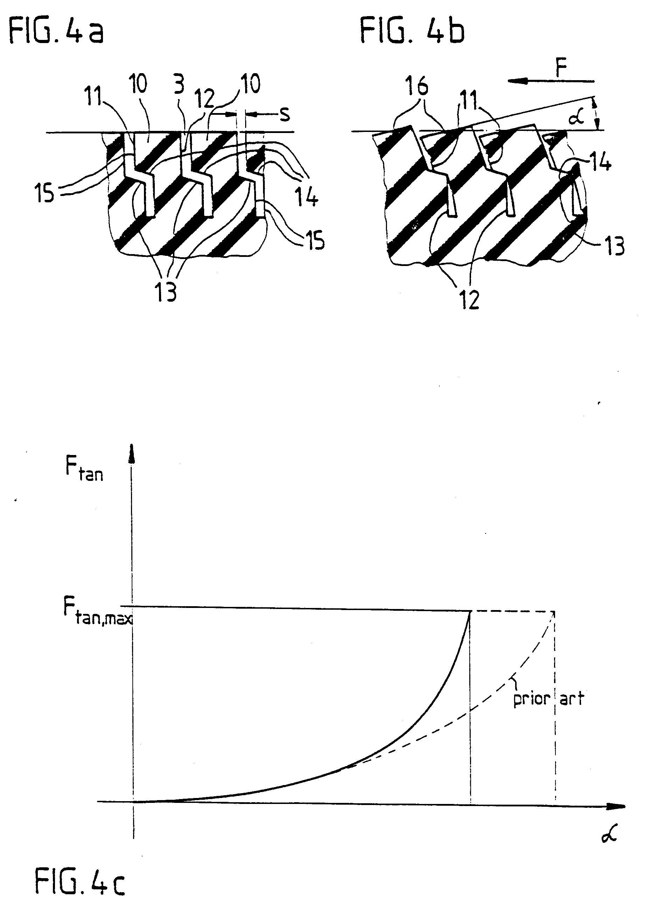

Die Figuren 4 zeigen Funktion und Wirkung der Erfindung:
Figur 4a zeigt einen Längsschnitt durch einen Profilteil ohne Längskrafteinwirkung. Die Schnittebene entspricht der, die in der vorherigen Figur zum Schnittumriß 9b des Bleches 7 führte und liegt im Reifen im wesentlichen axial. Daraus erklärt sich, daß hier nur eine Halbwelle erscheint; für eine Prinzipdarstellung der Funktionsweise reicht dies aber aus:
Durch die Einschnitte 3 ist das Profilpositiv in Lamellen 10 untergliedert. Jede Lamelle 10 hat eine voreilende Fläche 11 und eine nacheilende 12. Dadurch, daß die Wellenberge und -täler - nach Zerlegung ihrer Erstreckung in eine radiale und eine axiale Richtung - erfindungsgemäß auch eine axiale Komponente aufweisen, zeigen sich im Längsschnitt im wesentlichen in Umfangsrichtung verlaufende Flächen 13 und 14 neben an sich bekannten, radial verlaufenden Flächen 15.

Figur 4b zeigt in analoger Dastellung den gleichen Profilteil mit Einwirkung einer Bremskraft F. Wichtig ist, daß sich die im wesentlichen in Umfangsrichtung verlaufenden Teilflächen 14 der voreilenden Lamellenflächen 11 auf die Teilflächen 13 der nacheilenden Lamellenflächen 12 legen. Ab der Verformung - für die der Winkel Alpha, die Schrägstellung der Lamellenstirnflächen 16 zur Umfangsrichtung, ein repräsentatives Maß ist -, ab der es zur Berührung der Teilflächen 13 und 14 kommt, ist eine weitere Verformung behindert.

Zu einer Behinderung weiterer Verformung kommt es bei der bekannten Ausrichtung der Wellung, nämlich in der Radialen, zwar auch nämlich dadurch, daß sich die radial verlaufenden Flächen berühren, jedoch ist die dadurch erreichte Behinderung der weiteren Verformung weniger stark als bei der erfindungsgemäß orientierten Diagonalstellung der Wellenberge und -täler. Zur Verdeutlichung ist in den Figuren 4a und 4b die Schnittbreite s so stark übertrieben, daß die radial verlaufenden Abschnitte 15 der Flächen 11 und 12 erst bei deutlich größerer Verformung zur Anlage aneinander kommen als die - auch eine Komponente in Umfangsrichtung aufweisenden - Teilflächen 13 und 14. Tatsächlich empfiehlt sich eine kleinere Schnittweite s, sodaß der an sich bekannte Effekt, das Zusammenlegen der radialen Flächenteile, und der erfindungsgemäße, das Aufsetzen auch eine Komponente in Umfangsrichtung aufweisender Flächenteile 13 und 14, bei etwa gleicher Verformung Alpha eintreten.

Figur 4c zeigt die durch die Erfindung bewirkte Änderung in der Biegefederkennlinie einer Lamelle: Die Progression ist verstärkt gegenüber dem Stand der Technik (prior art).

Daraus folgt, das bei der maximalen Tangentialkraft F_{tan,max} sich die Lamellenstirnflächen 16 (siehe Figur 4b) weniger stark schräg stellen als beim Stand der Technik, was insbesondere den Bremsweg auf nasser Straße verkürzt, wobei im Bereich kleiner Tangentialkräfte, wie sie auf verschneiten Straßen gefahren werden, die Schrägstellung Alpha der Lamellenstirnflächen 16 nicht geschmälert wird, sodaß dort das Haftvermögen erhalten bleibt.

Der Fachmann kann sehr genau die Biegefederkennlinie auf die Einsatzbedingungen des jeweiligen Reifens abstimmen: eine Vergrößerung der Amplitude A (siehe Figur 3) der Wellung erhöht den erfindungsgemäßen Effekt der Versteifung ab Berührung der Flächenteile 14 und 15 (siehe Figuren 4a und b). Weiterhin ist der Versteifungseffekt etwa proportional zum Sinus des Winkels β zwischen der Radialen und den Linien der Wellenberge bzw. -täler, kann also auch durch Vergrößerung von β gesteigert werden. Eine Verkürzung der Wellenlänge Lambda (siehe Figur 3) läßt den Effekt schon bei kleinerer Verformung eintreten, eine Vergrößerung erst später. Eine Verkleinerung der Schnittweite s läßt den Effekt ebenfalls tendenziell schon bei kleinerer Verformung eintreten, hat aber einen größeren Effekt auf die Steifigkeitserhöhung bei größeren Verformungen.

Durch Wellenlänge Lambda, Amplitude A und Krümmungsradius in den Wellenbergen bzw. -tälern wird die Böschung, das ist die Schrägstellung der Einschnittflächen senkrecht zur "Ausbreitungsrichtung" der Welle bestimmt; sie darf umso steiler sein, desto enger die Schnittweite s ist. Daraus folgt ein Interesse, die Schnittweite s etwas kleiner als allgemein üblich zu wählen, nämlich etwa bei 0,4 mm für PKW-Winterreifen.

Eine Vergrößerung des Winkels β, also der erfindungsgemäßen Schrägstellung der Wellenberge und -täler zur Radialen 6 über 70° hinaus bringt keine wesentliche Steigerung des Effektes mehr, erhöht aber bei Extrembelastungen, insbesondere bei Kurvenfahrt auf trockener Straße an der Haftgrenze und großen Einschnitttiefen die Gefahr der Lamellenausbeulung mit den zugehörigen Reibwertminderungen. Aus diesen Gründen werden Schrägstellungen zwischen 30° und 50° bevorzugt.

Die Erfindung entschärft ohne Kostenerhöhung den Konflikt zwischen gutem Vortrieb auf Schnee einerseits und gutem Bremsvermögen auf nassen Straßen andererseits und empfiehlt sich insbesondere für Winterreifen mit Radialkarkasse.

## Patentansprüche

1. Fahrzeugreifen (1) mit einer Lauffläche (2), welche zumindest in einem ihrer axialen Randbereiche (L, R) in der Draufsicht im wesentlichen axial verlaufende Einschnitte (3) aufweist, die in solcher Weise gewellt sind, daß die Wellenberge (4) und -täler (5) im wesentlichen Geraden sind, die sich in der Querebene diagonal erstrecken, **dadurch gekennzeichnet,** daß die Schrägstellung der Wellenberge (4) und -täler (5) in der Weise orientiert ist, daß man beim gehen in der Querebene entlang der Einschnitte (3) nach radial außen nach axial innen gelangt.

2. Fahrzeugreifen (1) nach Anspruch 1 dadurch gekennzeichnet, daß die Wellenberge (4) und -täler (5) in der Querebene einen Winkel (β) zur Radialen (6) zwischen 20° und 70°, vorzugsweise zwischen 30° und 50° einnehmen.

3. Fahrzeugreifen (1) nach Anspruch 1 dadurch gekennzeichnet, daß die Einschnitte (3) in an sich bekannter Weise eine Schnittweite (s) zwischen 0,3 mm und 1,0 mm aufweisen.

4. Fahrzeugreifen (1) nach einem der vorangehenden Ansprüche dadurch gekennzeichnet, daß auch die im axial inneren Bereich (M) angeordneten Einschnitte (3) in erfindungsgemäßer Weise gestaltet sind.

5. Gewelltes Einschnittblech (7), welches in einer Vulkanisationsform verankert wird,
**gekennzeichnet durch** eine Schrägstellung der Wellenberge (4) und -täler (5) zur Verankerungskante (18) in einem Winkel (β) zwischen 20° und 70°, wobei die schrägen Wellenberge (4) und -täler (5) so orientiert sind, daß man beim gehen in der Querebene entlang der Einschnitte (3) nach radial außen nach axial innen gelangt.

## Claims

1. Vehicle tyre (1), having a tread surface (2) which has incisions (3) at least in one of its axial edge regions (L, R), said incisions extending substantially axially when viewed from above and being undulatory in such a manner that the undulation crests (4) and troughs (5) are substantially straight lines which extend diagonally in the transverse plane, characterised in that the inclined position of the undulation crests (4) and troughs (5) is orientated in such a manner that, when travelling in the transverse plane along the incisions (3), the direction of movement is radially outwardly to axially inwardly.

2. Vehicle tyre (1) according to claim 1, characterised in that the undulation crests (4) and troughs (5) assume, in the transverse plane, an angle (β) relative to the radial line (6) between 20° and 70°, preferably between 30° and 50°.

3. Vehicle tyre (1) according to claim 1, characterised in that the incisions (3) have, in a manner known per se, a width of cut (s) between 0.3 mm and 1.0 mm.

4. Vehicle tyre (1) according to one of the preceding claims, characterised in that the incisions (3), which are disposed in the axially internal region (M), are also configured in the manner according to the invention.

5. Undulatory incision plate (7), which is secured in a vulcanising mould, characterised by an inclined position of the undulation crests (4) and troughs (5) relative to the securing edge (18) at an angle (β) between 20° and 70°, the inclined undulation crests (4) and troughs (5) being so orientated that, when travelling in the transverse plane along the incisions (3), the direction of movement is radially outwardly to axially inwardly.

## Revendications

1. Pneumatique (1) de véhicule comprenant une bande de roulement (2) qui comporte au moins dans ses zones axiales de bordure (L, R) des entailles qui sont orientées sensiblement en direction axiale en vue en plan et qui sont ondulées de manière que le sommet (4) et le creux (5) des ondulations soient sensiblement des droites qui sont orientées en diagonale dans le plan transversal, caractérisé en ce que l'obliquité de la position du sommet (4) et du creux (5) des ondulations est orientée de manière qu'en longeant dans le plan transversal les entailles (3) radialement vers l'extérieur, on arrive axialement vers l'intérieur.

2. Pneumatique (1) de véhicule selon la revendication 1, caractérisé en ce que le sommet (4) et le creux (5) des ondulations inscrivent dans le plan transversal un angle (β) avec la direction radiale (6) qui est compris entre 20° et 70°, de préférence entre 30° et 50°.

3. Pneumatique (1) de véhicule selon la revendication 1, caractérisé en ce que les entailles (3) ont de manière connue une largeur d'entaille (s) comprise entre 0,3 mm et 1,0 mm.

4. Pneumatique (1) de véhicule selon l'une des revendications précédentes, caractérisé en ce que les entailles (3) disposées dans la région axialement intérieure (M) sont aussi réalisées de la manière conforme à l'invention.

5. Tôle tranchante ondulée (7) qui se fixe dans un moule de vulcanisation.
caractérisé par une obliquité de la position du sommet (4) et du creux (5) des ondulations sur le bord de fixation (18) suivant un angle (β) compris entre 20° et 70°, le sommet (4) et le creux (5) obliques des ondulations étant orientés de manière qu'en longeant les entailles (3) dans le plan transversal radialement vers l'extérieur, on arrive axialement vers l'intérieur.
